(19) **Europäisches Patentamt European Patent Office Office européen des brevets**

(11) **EP 1 732 259 B1**

(12) **EUROPEAN PATENT SPECIFICATION**

(45) Date of publication and mention of the grant of the patent:
**25.06.2008 Bulletin 2008/26**

(51) Int Cl.:
*H04L 9/00* (2006.01)     *H04L 29/06* (2006.01)

(21) Application number: **06017476.0**

(22) Date of filing: **29.01.2003**

(54) **Method and system for securely storing and transmitting data by applying a one-time pad**

Verfahren und System zum sicheren Speichern und Übertragen von Daten bei der Benutzung eines One-Time Pads

Procédé et système de stockage et de transmission de données securisées par application d'un one-time pad

(84) Designated Contracting States:
**AT BE BG CH CY CZ DE DK EE ES FI FR GB GR HU IE IT LI LU MC NL PT SE SI SK TR**

(30) Priority: **01.02.2002 US 61901**

(43) Date of publication of application:
**13.12.2006 Bulletin 2006/50**

(62) Document number(s) of the earlier application(s) in accordance with Art. 76 EPC:
**03707616.3 / 1 470 660**

(73) Proprietor: **Cisco Technology, Inc.**
**San Jose CA 95134-1706 (US)**

(72) Inventor: **Gleichauf, Paul**
**Saratoga**
**CA 95070 (US)**

(74) Representative: **Kazi, Ilya et al**
**Mathys & Squire LLP**
**120 Holborn**
**London EC1N 2SQ (GB)**

(56) References cited:
WO-A-01/99387          US-A1- 2003 002 675
US-B1- 6 199 165       US-B1- 6 205 488

• **STALLINGS W: "Cryptography and Network Security, Principles and Practice, 2nd Edition" 1999, PRENTICE HALL , UPPER SADDLE RIVER, NEWJERSEY 07458 , XP002240900 * page 38 - page 41 ***
• **JAMOUSSI B ET AL: "Constraint-Based LSP Setup using LDP" INTERNET ENGINEERING TASK FORCE (IETF), [Online] 1 January 2002 (2002-01-01), XP002241751 Retrieved from the Internet: URL:ftp://ftp.rfc-editor.org/in-notes/ pdfr fc/rfc3212.txt.pdf> [retrieved on 2003-05-20]**
• **"DARPA Internet Program Protocol Specification" INTERNET ENGINEERING TASK FORCE (IETF), [Online] 1 September 1981 (1981-09-01), XP002241752 Retrieved from the Internet: URL:ftp://ftp.rfc-editor.org/in-notes/ pdfr fc/rfc791.txt.pdf> [retrieved on 2003-05-20]**

## Description

The present invention generally relates to secured communications. The invention relates more specifically to a method and system for storage and transmission of data by applying a one-time pad.

BACKGROUND OF INVENTION

Security in data transmission and storage has become increasingly important as people become more reliant on computer-based communications. Such transactions often involve the transmission of confidential corporate or personal data through a computer network system, between clients or between servers and clients.

In a typical network system, such as a Metropolitan Area Network (MAN) or the Wide Area Network (WAN), multiple users have access to and communicate over a shared communication network Many computer applications require transmission of confidential or sensitive data over these shared networks, and such applications must regard the networks as public unless great care is taken to protect them.

There is an increasing concern about security in data storage, where data may be misappropriated or altered by unauthorized users who have obtained access. Databases and content delivery are examples of application domains in which concerns regarding protection of storage arise. Databases need protection from disaster through backups and recovery, and need to migrate in whole or in part as part of a caching solution for latency. Further, providing distribution of the database storage including transactions may be required, In content delivery, in general, a service provider wants to market rich data sets, such as multimedia, to a customer without risk of interception or copying by others who have not paid for the service.

Shared storage infrastructures in which stored data is collocated with other users' data, such as Storage Area Networks (SANs) and Network Attached Storage, are vulnerable to outside attacks. A SAN is a high-speed network, comparable to a LAN, which allows the establishment of direct block oriented connections between storage devices and processors (servers) centralized to the extent supported by network media (such as fibre channels or iSCSI). NAS is a form of LAN attached file server that serves files using a network protocol such as Unix Network File System (NFS), Windows Common Internet File Service (CFS), Apple Inc.'s Apple Filing Protocol (AFP), Novell Inc.'s NetWare Core Protocol (NCP) or, for the Web, Hypertext Transfer Protocol.

Data stored in shared infrastructures, such as SANs or NAS; must be protected from several threats, including:

> 1) An accidental or malicious mis-configuration, which can result from either an attempt at legitimate management or an attacker impersonating a qualified systems administrator. Network management tools are complicated and poorly integrated, and storage management tools are independent of network tools and require separate expertise. The coupling of these two tasks pose an increased risk of mistakes, such that users or administrators may be able to gain access to another's data.
> 2) Snooping of traffic during transport into and out of the data center, which can occur anywhere between the data center and customer location.
> 3) Impersonation of another user such that their storage is accessible. The mimicry may result from a hack attack on authentication mechanisms into the shared storage infrastructure, through an existing account that an attacker created explicitly for an attack, or through a hack into the remote server sites that access the shared storage.
> 4) Impersonation of administrators, such that storage and also complete control of the storage devices and the network become available to the attacker.

Techniques used in the past to store confidential data are tight access control through password protection and cryptographic methods. In one past approach, password protection is used to protect information from unauthorized access and to ensure reliable delivery. A password, or a uniquely defined identifier, is written into the storage media, and a user attempting to access the contents is required to enter the correct password. However, this method is susceptible to theft and illegal use of the password. Further, if the data and a program for its retrieval are packaged in the same medium, the data will be exposed to more serious risks and threats. Therefore, there has been a long demand for more reliable security systems to protect information in storage media from unauthorized access and to ensure safe transmission.

Historically, messages have also been protected by cryptography, in which information is sent in a secure form in such a way that the only person able to retrieve this information is the intended recipient Commonly, a message being sent is known as plaintext, which is then coded using a cryptographic algorithm, by a process is called encryption. An encrypted message is known as ciphertext, and is converted back into plaintext by the process of decryption The actual mathematical function used to encrypt and decrypt messages is a cryptographic algorithm or cipher.

Only the intended recipient of the confidential data should possess the randomly generated key necessary to decode the ciphertext into the plaintext massage. Therefore, the encrypted ciphertext may be freely transmitted over insecure public communication networks, while remaining undecipherable to anyone but the intended recipient.

However, these methods have limitations. For example, the security of the data depends on the possession of the key by the intended recipient and the vulnerability of the algorithm to being broken by an outside third party. Due to rapid advancements in computer technology, an algorithm once regarded as "unbreakable" may become vulnerable to brute force attacks. For example, the Data Encryption Standard (DES) algorithm with a 56-bit key was believed to be unbreakable at the time of its inception in 1976. By 1993, DES with a 56-bit key could theoretically broken in less than 8 hours using brute force with a highly sophisticated computer. Therefore, the key was lengthened to 128 bits. The increased key length proved to reduce vulnerability to attacks.

SANs and other shared storage systems expose the weakness of current encryption technologies because they move data with uncertain security requirements but tight latency constraints. For example, if a single key is used to encrypt a large number of data blocks then this approach is vulnerable to text attacks that look for patterns in trying to detect the key. It is then possible to look at the ciphertext streams and break the code if one sees enough traffic. Other schemes that change keys often do so at high cost

Further, many cryptographic techniques reuse keys that are shorter than the data set For large data sets, changing keys after the transport of some number of bits is essential to maintain security. A large data set implies that a malicious attacker will have the advantage of a larger amount of data to which to apply code-breaking tools. In this case, determining how often to distribute new keys is difficult. Key distribution frequencies are based upon estimates of the growth in computational capability, the length of time that the data owner estimates it is necessary to keep the data protected, and assumptions about the security of the encryption algorithm used. A long trusted encryption algorithm might be subject to a new decryption method that requires far fewer resources. The desired protection time can be difficult to determine. Thus, there is a need in this field for a method that provides strong data protection without the cost or unreliability of high key distribution frequencies.

All the cryptographic methods employed above rely on mathematical algorithms and keys, The data is only as secure as the algorithm applied. Further, as computer technology becomes more powerful and efficient, an algorithm currently thought to be unbreakable becomes subject to future brute-force attacks. As a result, data encrypted using these methods are subject to compromise.

There is only one unconditionally secure algorithm that is theoretically impenetrable by a brute-force attack: the one-time pad. Unlike all other algorithms, it cannot be broken given infinite time and resources.

The one-time pad is a non-repeating random string of characters, symbols or letters. Each letter on the pad is used only once to encrypt one corresponding plaintext character. There is one copy of the pad at the transmitter and one at the receiver. Alter use, the pad is never re-used. There is no potentially breakable mathematical algorithm, and as long as the pad remains secure, so does the message. One-time pads have been used, in past approaches, to encrypt diplomatic communications and the like; the key challenge in their use is how to distribute new pads to counter-parties when existing pads are exhausted.

In a computer-automated one-time pad system, the message and pad are encoded in binary. To encrypt the message each bit in the plaintext is combined with a bit in the randomly generated pad in sequence using a bitwise Boolean exclusive-or transformation (abbreviated XOR). The operation is performed on each bit in sequence, i.e. the first bit of the plaintext is XORed with the first bit of the pad to produce the first bit of the ciphertext, the second bit of the plaintext is XORed with the second bit of the pad to produce the second bit of the ciphertext and so on. This process is defined as the Vernam cipher.

Since the keystream used for encoding is randomly generated, it cannot be guessed or derived using a mathematical algorithm, or by statistical analysis. Further, the resulting ciphertext appears purely random and resists traditional statistical and mathematical attacks. In order to determine the keystream by guessing based on the ciphertext, the entire keystream used for encoding must be guessed, which is effectively guessing at the message itself, In addition, discovery of a previous key used to encode an earlier message is useless in decoding future messages, as later messages are encoded using a newly generated random keystream sequence. Such a cipher is said to offer perfect secrecy, and for this reason it has been utilized during wartime over diplomatic channels requiring exceptionally high security.

However, a limitation of the one-time pad is that the length of the key sequence must be the same length of the message. This limitation may be acceptable for short messages, but it is impractical for a high-bandwidth communications channel. Further, the protection of the data is only as secure as the physical protection of the randomly generated keystream on both the sending and receiving ends.

Thus, while an important advantage of the one-time-pad is that there is no key to crack, the difficulty has always been in sharing the pad. There are two reasons this has been difficult: size of the pad and predictability. In past approaches, the size of the key or keystream has been equal to the size of the data set, making distribution of the pad or keystream cumbersome at best. The keystream can be reduced in size and repeated to result in sufficient keystream to encrypt a text, but this exposes the ciphertext to certain kinds of statistical and dictionary attacks.

The second difficulty has been that the keystream must be totally random so two sides cannot share some seed and predict the next bit; if they can, the ciphertext becomes crackable. Sending the key in parallel with the ciphertext, so that an attacker can eavesdrop both streams, does not achieve any security advantage since the attacker can recover the stream as easily as the end point. Shifting the transfer in time doesn't help much either since the attacker can simply wait. US6, 199, 165B1 discloses a system which recognizes data as being secure or general, and transmits the two on separate channels. 'Cryptography and Network Security' (Stallings W), 1999, page 38-41 discloses the use of a one-time pad and keystream in the art of encryption.

Based on the foregoing, there is a clear need for a method for efficiently and securely storing and transmitting data through insecure network communication channels, and which is capable of being utilized for larger communication channels without decreasing network capacity requirements.

SUMMARY OF THE INVENTION

The foregoing needs, and other needs and objects that will become apparent for the following description, are achieved in the present invention, which comprises a method of securely storing data by applying a one-time pad as set out in claim 1.

An approach for securely transmitting and storing data is hereafter described. A sending host generates a truly random sequence of characters as a keystream that may serve as a one-time pad. The keystream is bitwise combined with plaintext using an exclusive-OR operation to result in creating ciphertext. The keystream and ciphertext are routed over physically separate communication paths to a receiving host. The receiving host decrypts the ciphertext by applying the keystream to the ciphertext using bitwise exclusive-OR. The separately routed paths may be established using MPLS labeling, static or strict route options. The keystream may be precomputed and sent to the receiving host asynchronously for caching at the receiving host; the receiving host may then replace cached keystream with recovered plaintext as the ciphertext is decrypted, thereby achieving savings in storage. Security of the system lies in the truly random nature of the keystream and the use of physically separate routing paths for keystream and ciphertext.

In one specific approach, a first data stream comprising a generated keystream based on a one-time pad is received. A second data stream comprising ciphertext is also received, wherein first and second data streams are received on two physically separate communication channels. The ciphertext is decrypted using said equal length keystream, resulting in creating and storing decrypted data that is equivalent to the source text

One feature of this aspect is the decryption of ciphertext comprises performing a Boolean exclusive-OR function bitwise on the ciphertext and keystream to obtain the decrypted plaintext data. According to another feature, the storage of decrypted data comprises overwriting the used keystream with said decrypted plaintext data.

According to another aspect, a first data stream comprising a keystream generated based on a one-time pad is received. A second data stream comprising ciphertext is received, wherein first and second data streams are received on two physically separate communication channels. The data stream is stored in a first shared storage infrastructure and the keystream is stored in a second shared storage infrastructure for later decryption.

According to another aspect, a keystream is randomly generated based on a one-time pad. Plaintext data is encrypted into ciphertext using a keystream having a length equal to a length of a source text. A Boolean exclusive-OR function is performed bitwise on the source text and keystream to obtain the ciphertext.

One feature of this aspect is plaintext data converted into source text composed of a plurality of binary digits. A keystream of length equal to the source text is generated using a true random number generator. A Boolean exclusive-OR function is performed bitwise on the source text and keystream to obtain the ciphertext.

The plaintext data is encrypted into ciphertext using a keystream having a length equal to length of the source text. The ciphertext and keystream are transmitted on two physically separate network paths. The ciphertext is decrypted using an equal length keystream, resulting in creating decrypted data that is equivalent to the source text.

In other aspects, the invention encompasses a computer system as set forth in claim 13 and a computer readable medium carrying a program for effecting the method claimed in claim 1.

BRIEF DESCRIPTION OF THE DRAWINGS

The present invention is illustrated by way of example, and not by way of limitation, in the figures of the accompanying drawings and in which like reference numerals refer to similar elements and in which:

FIG. 1 is a block diagram illustrating a system for securely transmitting and storing data by applying a one-time pad;

FIG. 2 is a flow diagram illustrating a method of securely transmitting and storing data by applying a one-time pad;

FIG. 3 is a flow diagram illustrating a method of decrypting data;

FIG. 4 is a flow diagram illustrating a method of securely transmitting and storing data in which keystream is pre-computed and cached;

FIG. 5 is a flow diagram illustrating a method of separately routing keystream and ciphertext; and

FIG. 6 is a block diagram of a computer system with which an embodiment may be implemented.

DETAILED DESCRIPTION OF THE PREFERRED EMBODIMENT

A method for securely storing and transmitting data by applying a one-time pad is described. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

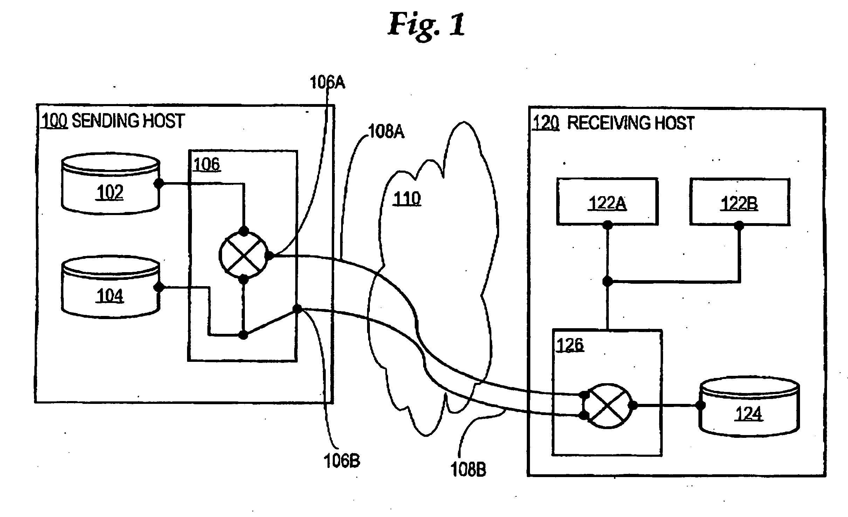

FIG. 1 is a block diagram of an example data network context in which an embodiment may be used. In general, FIG. 1 illustrates a sending host 100, network 110, and receiving host 120. Each host 100, 120 may comprise a network infrastructure node such as a router, switch, gateway, or other processing element; alternatively, hosts 100, 120 may be end station devices such as personal computers, workstations, servers, or any other suitable processing device. Network 110 is non-secure, and may comprise one or more local area networks, wide area networks, metropolitan area networks, storage networks, internetworks, or a combination of the foregoing.

Sending host 100 comprises plaintext data 102 and one-time pad data 104 that are communicatively coupled to an encryption engine 106. The encryption engine 106 has a ciphertext output 106A and a keystream output 106B. In this arrangement, encryption engine 106 can receive a continuous first data stream of plaintext data 102 and a continuous second data stream of one-time pad data 104, combine the plaintext data and one-time pad data in an XOR operation, and present the resulting ciphertext on ciphertext output 106A. Encryption engine 106 also outputs the one-time pad data, unmodified, on keystream output 106B.

Sending host 100 is communicatively coupled through network 110 to receiving host 120 on first and second separately routed data paths 108A, 108B. First data path 108A carries ciphertext from output 106A of sending host 100, and second data path 108B carries a one-time pad key stream from output 106B of the sending host. Establishment of data paths 108A, 108B in network 110 is described further herein.

Receiving host 120 comprises a decryption engine 126, plaintext data 124, and one or more shared storage infrastructure elements 122A, 122B. The storage infrastructure elements comprise one or more mass storage devices and associated gateways or controllers. For example, EMC disk storage arrays may be used. Decryption engine 126 receives ciphertext from data path 108A and the one-time pad key stream from data path 108B. In this arrangement, decryption engine 126 can combine the ciphertext and the one-time pad key stream, then perform an XOR operation, yielding plaintext data 124 as a result.

Decryption engine 126 also can provide a copy of the plaintext data 124 to one or more shared storage infrastructure elements 122A, 122B. The storage elements may participate in one or more storage area networks, or may comprise network attached storage elements. When shared storage infrastructure elements 122A, 122B participate in a SAN or as NAS architectures, such architectures conventionally provide separate networks for communication of data to and from storage and for data management functions. These two networks can be used to separate key and data streams for secure protection of data even within the storage network. The storage elements may store plaintext or ciphertext for use or processing at receiving host 120 depending upon the relative security requirements for the storage of data within the storage network. In this arrangement, secure storage and transmission of data may be provided by applying a one-time pad.

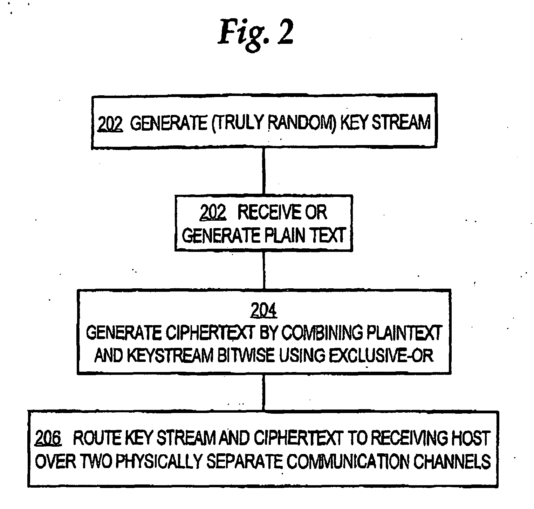

FIG. 2 is a flow diagram illustrating a method of securely transmitting and storing data by applying a one-time pad. In block 202, a key stream is generated. For example, sending host 100 internally generates a key stream using an automatic process, or retrieves keystream data from one-time pad data 104. To enhance security of the system, the generated key stream data should be truly random rather than pseudorandom or non-random. Indeed, with a truly random key stream the system may approach a state of theoretically perfect security.

An event sequence can be said to be truly random if it is impossible to predict the next event in the sequence even if the entire state of the generating process up to that point is known. Random data for the pad may be gathered by hardware accessing processes of a truly non-deterministic nature. Radioactive decay and electronic tunneling in electronic components are both non-deterministic phenomena produced by events occurring at the quantum subatomic level By gathering and processing the output from Geiger counters or Zener diodes, it is possible to obtain truly random data for the pad. Further background information on available methods for true random number generation is provided in O. Goldreich, "Modern Cryptography, Probabilistic Proofs and Psuedorartdomness" (Berlin: Springer-Verlag, 1999).

Alternative algorithms can exchange shorter keys that are used to generate a pseudo-random stream of bits to encrypt and decrypt data. In these approaches the entropy of the keystream is less than the method presented here, keys have to be periodically renewed with new ones, and the computation of the key schedule is subject to review based on the evolution of computer capabilities, and the estimate of the entropy produced by the key generator.

In block 203, plain text is received or generated. The plain text may comprise user input entered at sending host 100, data that is retrieved from a storage device associated with sending host 100, data that is automatically generated by programmatic processes executed at sending host 100, etc.

In block 204, ciphertext is generated by combining the plaintext and the keystream bitwise using an exclusive-OR function. Block 204 may be carried out by encryption engine 106 of FIG.1. Expressed in mathematical terms, Data stream D of length L is combined with a random keystream K, also of length L, bit-by-bit using the XOR function ($\oplus$) to produce an encrypted data stream E:

$$\|E\| = \|K\| = \|D\| = L,$$

$$E = D \oplus K$$

In block 206, the keystream and ciphertext are routed to a receiving host over two physically separate communication channels. For example, as shown in FIG. 1, plaintext data 102 is routed from first output 106A of encryption engine 106 over communication channel 108A to receiving host 120, and one-time pad data 104 is routed from output 106B of encryption engine 106 over channel 108B to the receiving host. Methods for establishing separately routed paths are described further herein in paragraphs below.

Thus, in one embodiment, a receiving host receives a first data stream comprising a randomly generated keystream and a second data stream comprising encrypted data, or ciphertext. Two physically separate communication channels are routed through the network from sending host to receiving host to convey the encrypted data and key.

The decryption process at the endpoint generally involves the converse application of XOR to E to produce D:

$$D = E \oplus K$$

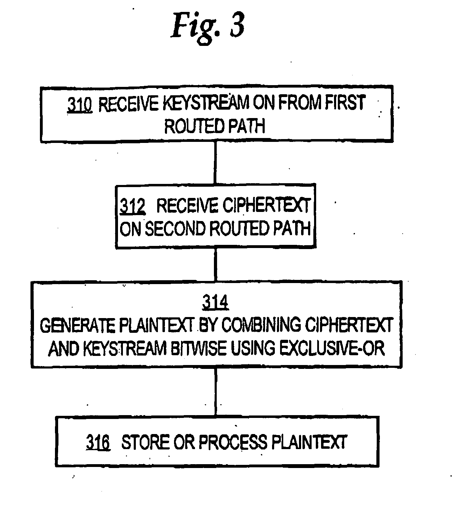

FIG. 3 is a flow diagram of a method of decrypting data. In block 210, keystream data is received from the first routed path. For example, in the arrangement of FIG. 1, decryption engine 126 of receiving host 120 receives keystream data on channel 108B.

In block 212, ciphertext is received on a second routed path. Referring again to FIG. 1, decryption engine 126 of receiving host 120 receives ciphertext on channel 108A.

In block 214, plaintext is generated by combining the received ciphertext and keystream bitwise using an exclusive-OR operation. The resulting plaintext data 124 may be immediately processed by receiving host 120 in any appropriate manner or may be stored. In another embodiment, the data stream and keystream are received on two physically separate network paths at the receiving host and stored in first and second shared storage infrastructures for later decryption, For example, data from channel 108A may be stored in storage infrastructure element 122A and keystream from channel 108B may be stored in storage infrastructure element 122B.

In another embodiment, the plaintext is converted into source text composed of a plurality of binary digits. A random keystream is generated at the sending host. The keystream is generated using a true random number generator. The plaintext data is encrypted into ciphertext using a keystream segment having a length equal to a length of the source text. Two physically separate communication channels are routed through the network to transmit the randomly generated keystream segment and data stream the ciphertext.

In this embodiment, source text the ciphertext is decrypted using the equal length keystream, resulting in creating decrypted data that is equivalent to the source text.

As described above in connection with FIG. 2, block 206, the keystream and ciphertext are routed through two separate paths from sending host to receiving host, In one embodiment, the keystream and ciphertext are kept completely separate from one another throughout their traversal from sending host to receiving host. Where the receiving host is an element of a data center and the sending host is outside the data center, the keystream and ciphertext are kept entirely separate both outside of and inside the data center. If the keystream and ciphertext are sent on paths that overlap entirely or in any part, a malicious listener could apply the key stream to the data stream without discovery by the sending party or receiving party that an interception has occurred. While the randomness of the keystream and ciphertext decreases the likelihood of attack, because it is difficult to get the correct alignment of the two streams, and to associate one with the other among all other data traffic, maintaining separate paths nevertheless increases security.

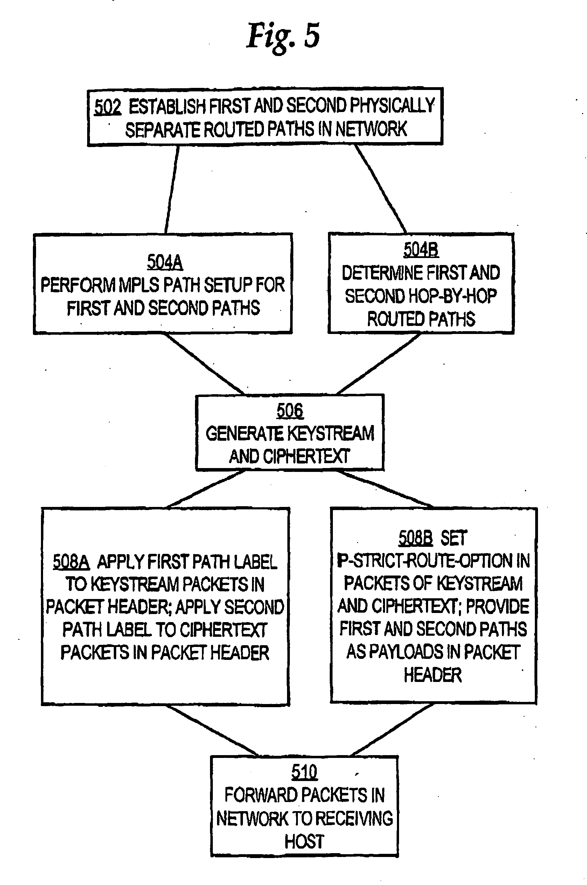

FIG. 5 is a flow diagram illustrating a method of separately routing keystream and ciphertext In block 502, first and second physically separate routed paths are established in a network between a sending host and receiving host. The separation of paths preferably involves separation at a physical network layer one, and does not merely involve establishing a virtual tunnel, for example. Such physical layer separation can be accomplished, for example, using multi-protocol label switching (MPLS), or by source routing under version 6 of Internet Protocol ("IPv6"). In principle, the paths could be virtually distinct (i.e., through the use of two virtual private network ("VPN") tunnels that are effectively encrypted paths that use conventional key exchange and renewal algorithms). This weakens the security of the system by making it dependent upon the strength of the cryptography used in creation and maintenance of the tunnels.

In an MPLS network, incoming packets are assigned a "label" by a "label edge router" (LER). Packets are forwarded along a "label switched path (LSP)" where each "label switch router (ISR)" makes forwarding decisions based solely on the contents of the label. For example, the LSR examines the label of an incoming packet, looks up the label in a mapping of labels to egress interface identifiers, and forwards the packet on the interface identified in the mapping, without making conventional hop-by-hop forwarding decisions. At each hop, the LSR also strips off the existing label and applies a new label, obtained from the mapping, which tells the next hop how to forward the packet.

Label switch paths are established by network operators for a variety of purposes, such as to guarantee a certain level of performance, to route around network congestion, or to create IP tunnels for network-based virtual private networks.

As shown by block 504A, MPLS path setup is performed for first and second paths associated with keystream and ciphertext; respectively. In an embodiment as described here, before the processes of FIG. 2 and FIG. 3 are carried out, a network operator establishes a first MPLS path in the network for the keystream, and a second MPLS path for the ciphertext, using appropriate router commands or configuration tools. The path setup process also defines labels that identify keystream packets and ciphertext packets, In block 506, keystream and ciphertext are generated as in the process of FIG. 2. Thereafter, the keystream and data stream are transmitted across physically separate network paths by labeling the keystream with one MPLS label and labeling the data stream with a second MPLS label, as indicated by block 508A and block 510.

Alternatively, in block 504A, first and second routed paths are determined. Under Ipv6, the keystream and data stream are transmitted across physically separate paths by declaring a first path for the keystream and second path for the data stream. A network operator determines the first path and the second path before the processes of FIG. 2 and FIG. 3 are carried out. Each packet of the keystream includes an IP-STRICT-ROUTE-OPTION flag value, and includes the first path as a payload value, as indicated by FIG. 508B. Similarly, packets of the ciphertext declare a strict route equal to the second path, as also indicated in block 508B. The packets are then forwarded as in block 510. As the packets arrive at network nodes, the IP-STRICT-ROUTE-OPTION value essentially instructs intermediate network nodes to forward the keystream packets along the path defined in the payload.

In one alternative embodiment, the initial data stream of plaintext is compressed to remove redundant bits, resulting in creating a source text having a length that is shorter than the original plaintext This in turn will permit a shorter keystream. This ordering is not reversible, i.e., the encrypted stream E is not compressible if the keystream is random.

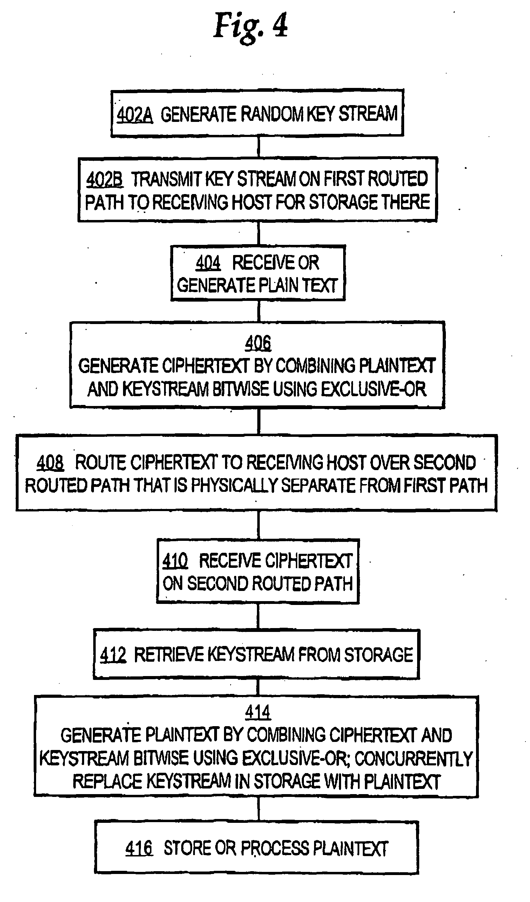

FIG. 4 is a flow diagram illustrating a method of securely transmitting and storing data in which keystream is pre-computed and cached, providing more efficient use of storage at the receiving host.

In block 402A, a segment of keystream is generated or pre-computed. In block 402B, the pre-computed segment is sent over channel 108B for storage at receiving host 120 in storage infrastructure element 122B. In block 404, plain text is received at the sending host from a programmatic source, or generated, or retrieved from storage. In block 406, ciphertext is generated by combining the plaintext and the keystream. In block 408, the ciphertext is routed to the receiving host over a second path that is different from the path over which the pre-computed keystream was sent

In block 410, the ciphertext is received, e.g., at the receiving host, over the second path. In block 412 the keystream is retrieved from storage. In block 414, the ciphertext is decrypted, and the keystream is concurrently replaced in the storage with the resulting plaintext. In one embodiment, as the encrypted data arrives on channel 108A at decryption engine 126, the decryption engine reads sub-segments of keystream from storage infrastructure element 122B as needed, and immediately decrypts the ciphertext. Substantially simultaneously, the decrypted data D is stored in storage infrastructure element 122B and replaces the used segment of the key. In block 416, the plaintext is stored or processed as desired.

The approach of FIG. 4 reduces storage by eliminating a need to hold both the keystream and encrypted data until decryption. For shared data infrastructures, the separate streams can ensure greater security, because two separate organizations can hold each component without exposing either one.

In this approach, separate paths may be maintained within a data center that has SAN or NAS storage by routing the keystream on the data management network and the ciphertext on the storage network.

For applications with strong real-time constraints, the steams K and B are transported synchronously between the sending host and receiving host. In this alternative, decryption is applied at the receiving host without delay involved in recalling the key stream from storage. The synchronization between streams in a packet network can use the sequence numbers that form a part of the conventional packet header, such as those found in the Transport Control Protocol (TCP) header, or the synchronized streams can have special markers for alignment in case decryption faults occur without loss of security. In both the real-time and cached key versions described here, the key is consumed as part of the decryption step.

The storage of separate data streams and keystreams in first and second shared storage infrastructures, such as SANs, in the receiving host, means that a receiving party needs access to both of them to decrypt or legitimately encrypt data. Accordingly, in one embodiment, each of the storage infrastructures 122A, 122B are protected by separate authentication algorithms, such that compromise of either the encrypted data or the encryption key storage does not compromise the other.

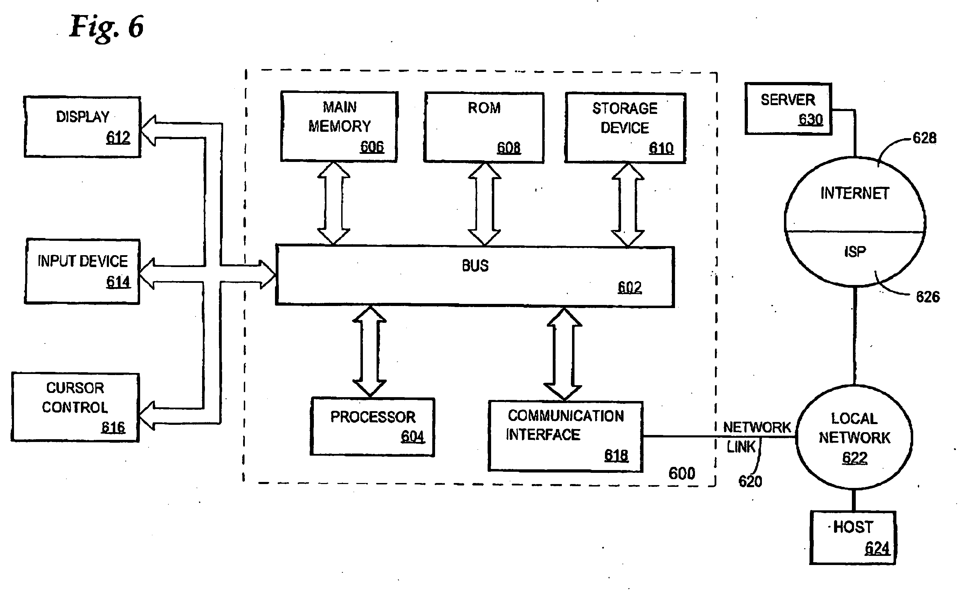

FIG. 6 is a block diagram that illustrates a computer system 600 upon which an embodiment of the invention may be implemented. Computer system 600 includes a bus 602 or other communication mechanism for communicating information, and a processor 604 coupled with bus 602 for processing information. Computer system 600 also includes a main memory 606, such as a random access memory ("RAM") or other dynamic storage device, coupled to bus 602 for storing information and instructions to be executed by processor 604. Main memory 606 also may be used for storing temporary variables or other intermediate information during execution of instructions to be executed by processor 604. Computer system 600 further includes a read only memory ("ROM") 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a cathode ray tube ("CRT"), for displaying information to a computer user. An input device 614, including alphanumeric and other keys, is coupled to bus 602 for communicating information and command selections to processor 604. Another type of user input device is cursor control 616, such as a mouse, trackball, stylus, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

The invention is related to the use of computer system 600 for securely storing data by applying a one-time pad. According to one embodiment of the invention, securely storing data by applying a one-time pad is provided by computer system 600 in response to processor 604 executing one or more sequences of one or more instructions contained in main memory 606. Such instructions may be read into main memory 606 from another computer-readable medium, such as storage device 610. Execution of the sequences of instructions contained in main memory 606 causes processor 604 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 604 for execution. Such a medium may take many forms, including but not limited to, non-volatile media, volatile media, and transmission media. Non-volatile media includes, for example, optical or magnetic disks, such as storage device 610. Volatile media includes dynamic memory, such as main memory 606. Transmission media includes coaxial cables, copper wire and fiber optics, including the wires that comprise bus 602. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 604 for execution. For example, the instructions may initially be carried on a magnetic disk of a remote computer. The remote computer can load the instructions into its dynamic memory and send the instructions over a telephone line using a modem. A modem local to computer system 600 can receive the data on the telephone line and use an infrared transmitter to convert the data to an infrared signal. An infrared detector can receive the data carried in the infrared signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network ("ISDN") card or a modem to provide a data communication connection to a corresponding type of telephone line. As another example, communication interface 618 may be a local area network ("LAN") card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider ("ISP") 626. ISP 626 in turn provides data communication services through the worldwide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are exemplary forms of carrier waves transporting the information.

Computer system 600 can send messages and receive data, including program code, through the network(s), network-link 620 and communication interface 618. In the Internet example, a server 630 might transmit a requested code for an application program through Internet 628, ISP 626, local network 622 and communication interface 618. In accordance with the invention, one such downloaded application provides for securely storing data by applying a one-time pad as described herein.

The received code may be executed by processor 604 as it is received, and/or stored in storage device 610, or other non-volatile storage for later execution. In this manner, computer system 600 may obtain application code in the form of a carrier wave.

Further, the present invention may be embodied on a computer system comprising a sending host connected to a receiving host through a communication network; means at the sending host for encrypting plaintext data, means at the sending host for generating a random keystream, means for transmitting said keystream and ciphertext on physically separate network paths, means at receiving host for decrypting ciphertext, and means at the receiving host for storing said keystream and ciphertext in physically separate shared storage infrastructures.

Embodiments have numerous practical uses and advantages. The approaches presented herein are simple to implement. The XOR operations for encryption and decryption may be implemented in hardware such as electronic integrated circuits. The encrypted data has theoretically perfect security, depending on the randomness of the keystream. As a result, to estimate the security of the data, only one parameter requires monitoring, namely the quality of the random number generator. Accordingly, the quality of protection is readily evaluated.

The use of a one-time-pad assures that the encryption is secure independent of any knowledge about the content type, or an estimate of the relative security required to protect it. Other cryptographic techniques reuse keys that are shorter than the data set. Especially for large data sets, it is important to change keys after the transport of some number of bits. Communication of a data set having a large size implies that a malicious attacker will have the advantage of a large data set to apply code-breaking tools. It is a challenge to estimate how often to distribute new keys. Key distribution frequency may be based upon estimates of growth in computational capability (e.g., as defined by Moore's Law) and the length of time that the data owner estimates it is necessary to keep the data protected, and assumptions about the security of the encryption algorithm used. A long trusted encryption code might be subject to a new algorithm that requires far fewer resources to decrypt. The desired protection time can be very difficult to determine; the easiest assumption is to estimate the time is indefinite, and use of a one-time-pad guarantees security over an indefinite time.

One application of the approaches herein relates to database replication, migration and disaster recovery. Databases are widely stored using SANs. It is important to be able to copy a database for fast read access, e.g., by replication. In general, replication is not required to occur in real time. Database migration is an optimization to decrease latency on subsets of data by placing data as close as possible to where it will be used; in general, database migration also may be carried out in other than real time, but this may be constrained by hard real-time delivery requirements, depending on the nature of the data in the database. Disaster recovery embraces the complete cycle of backup technologies to protect data and restore it. There are advantages to keeping the data encrypted at remote sites for some archival applications, and the approaches herein facilitate these advantages by requiring separate service providers to hold the keystream and the content, which are indistinguishable and appear as a random set of bits.

Distributed transactions are the hardest model for databases to support on the Internet because of transport latencies. If distributed transactions cannot be avoided, for example, through a clever combination of data migration using geographic cues, then the approaches herein offer minimal overhead.

Content delivery using multiple interfaces to the ISP is yet another application that benefits from the approaches herein. A content provider needs to be intimately teamed with a service provider managing a content delivery network. The content provider may want to track where all its content has been cached in the network, which is a database problem, and control its distribution. An ISP is likely to have multiple interfaces into the Internet for physically isolating the key and data streams. Another option is for the unencrypted content to be held at the service provider and encrypted for delivery at the caching server. The overhead at the service provider is mainly the cost of generating random keystream; however, the keystream can be generated in advance and pre-shipped to the customer so that a given keystream can be used on an arbitrary data steam selected by the consumer.

Content delivery to the endpoint consumer is yet another application. Many homes with DSL service also have cable access. Cable is beneficial for delivering high volume streams of data to the consumer, but it is a shared medium in that other people connected to the same cable head end can see the same traffic. Therefore, cable is not well suited for delivery of a customized stream to one specific customer and no other. Further, content providers want to encrypt data with minimum cost and processing power required at the customer. Accordingly, a content provider can use the approaches described herein to pre-cache a unique key stream using an encrypted tunnel over cable, since some of the long-term security requirements are less stringent; for example, the delivered data is ephemeral The cached stream can be stored in a CPE device if there is a mass storage device on the network. In this model one is only taking advantage of the low processing requirements for the decryption.

In a variation of this approach, dual broadband interfaces to the same consumer are used. For example, the DSLAM to DSL modem path is unshared point-to-point and can be used to transport the key stream, For video delivery, this approach may be complicated by bandwidth constraints and may require partial local caching. The head end to cable modem path can be used to send the encrypted data stream. A set-top box can take the two streams and merge them for customer view.

Encrypted real-time multimedia delivery is another application of the approaches herein, The low latencies and simplicity of both the encryption and decryption methods when combined with the real-time variant of the key transmission can be applied to secure multimedia streams in general, and digital telephony in particular. The low computational requirements of the XOR operation means that devices which can manage two simultaneous equal bandwidth streams do not need additional cryptographic processing resources.

In yet another application, a content creator wishes to push a copy of a movie closer to the edge of a network for caching purposes. The movie must be encrypted to protect the intellectual property rights of the content creator, and to show good faith in protecting the copyright. Encrypting the movie content during transmission from the content creator to an edge network node of a service provider using the approaches herein, using appropriate MPLS labels to ensure a different path, provides a secure, highly cost effective, extremely efficient, and fast delivery method.

Further, using multiple separate paths in a network, as described herein, means that an attacker would have to monitor all possible paths between the endpoints, understand the streams and their timing and intelligently put them together, which is considered impractical. In addition, the approaches herein may be implemented using minimal software at each of the sender and receiver, and by providing sender and receiver with a network interface, yet the approaches remove key management complexity, many different attack types, and do not require complex security policy management.

## Claims

1. A method for securely storing and transmitting data by applying a one-time pad, the method comprising the computer-implemented steps of: generating (202) a keystream based on a one-time pad; encrypting (204) plaintext data into ciphertext using a keystream having a length equal to a length of the source text; transmitting (206) ciphertext and keystream on two separate network paths (108A, 108B); wherein each of the two separate network paths (108A, 108B) is a packet routed path that is physically separately routed through a public packet switched internetwork; further comprising the step of: receiving (302) the keystream in advance of receiving (312) the ciphertext; caching the keystream; and decrypting (314) the ciphertext by retrieving the keystream from the cache and overwriting the retrieved keystream in the cache with said decrypted data.

2. The method according to Claim 1 comprising the step of decrypting (314) the ciphertext by combining the ciphertext and keystream bitwise using a Boolean exclusive-OR operation.

3. A method as recited in Claim 1, further comprising the steps of receiving and storing the keystream in a first storage device and receiving and storing the ciphertext in a second storage device that is separate from the first storage device.

4. A method as recited in Claim 1, further comprising the steps of establishing (504A) first and second separately routed communication paths in a network for the keystream and ciphertext, respectively, by establishing first and second MPLS label paths in nodes of the network.

5. A method as recited in Claim 1, further comprising the steps of establishing (504B) first and second separately routed communication paths in a network for the keystream and ciphertext, respectively, by determining the first and second paths and forwarding packets of the keystream and ciphertext, wherein each such packet has an IP-STRICT-ROUTEOPTION value set in the packet and has a payload comprising one of the first and second paths.

6. A method as recited in Claim 1, further comprising the steps of generating the keystream using a true random value generator at a sending host; generating the ciphertext by combining a source text bitwise with the keystream using a Boolean exclusive-OR operation; establishing a first routing path in a network between the sending host and a receiving host for the keystream; establishing a second routing path in the network for the cyphertext, wherein the second routing path is entirely physically separate from the first routing path; and forwarding the keystream to the receiving host over the first routing path and forwarding the cyphertext to the receiving host over the second routing path.

7. A method as recited in Claim 6, further comprising the step of compressing the source text prior to combining the source text with the keystream.

8. A method as recited in Claim 1, wherein the step of decrypting is performed concurrently with receiving the cyphertext.

9. A method according to claim 1, wherein the plaintext data that is encrypted represents a database and wherein the method is provided for securely duplicating the database.

10. The method according to Claim 9 wherein said step of encrypting the database comprises: converting the database into source text composed of a plurality of binary digits; generating a keystream of length equal to the source text using a true random number generator; combining the source text and the keystream bitwise using a Boolean exclusive-OR function.

11. The method according to Claim 9 wherein said step of transmitting ciphertext and keystream on two separate network paths is performed by labeling (508A) a first data stream carrying the ciphertext with a first MPLS label and labeling a second data stream carrying the keystream with a second MPLS label.

12. The method according to Claim 9 wherein said step of transmitting ciphertext and keystream on two separate network paths comprises establishing a first path by declaring a first strict route for a first stream carrying the ciphertext and establishing a second path by declaring a second strict route for a second data stream carrying the keystream.

13. A method according to claim 1, wherein the plaintext data that is encrypted represents multimedia content and is transmitted from a service provider to a consumer.

14. A method as recited in claim 13, wherein the transmitting step transmits the keystream over a DSL communication link to the consumer and transmits the cyphertext over a cable communication link to the consumer.

15. A method according to claim 14, wherein the decrypting step is performed in a settop box which is connected to both said DSL and said cable communication links.

16. A method according to claim 1, wherein the plaintext data that is encrypted represents multimedia content and is transmitted from a content provider to a service provider.

17. A method for securely storing data by applying a one-time pad, the method comprising the computer implemented steps of receiving (310) a first data stream comprising a keystream of truly randomly generated characters; receiving (312) a second data stream comprising ciphertext, wherein the first and second data streams are received on two physically separate routed communication channels through a public packet switched internetwork, wherein the ciphertext comprises a source text that is encrypted by applying the keystream to the source text; decrypting (314) the ciphertext using the keystream, resulting in creating and storing decrypted data that is equivalent to the source text; wherein the keystream is received and stored in advance of receiving the ciphertext, and wherein the stored keystream is replaced in the same storage location with the decrypted data as the ciphertext is decrypted.

18. A method according to claim 17, wherein the source text that is encrypted represents a database and wherein the method is provided for securely duplicating the database.

19. A method according to claim 17, wherein the source text that is encrypted represents multimedia content and is received from a service provider by a consumer.

20. The method according to Claim 17 comprising the step of decrypting the ciphertext by combining the ciphertext and keystream bitwise using a Boolean exclusive-OR operation.

21. A method as recited in Claim 17, wherein the step of decrypting is performed concurrently with receiving the cyphertext.

22. A computer implementable instructions product comprising computer implementable instructions for causing a programmable computer to carry out all the method steps of any of Claims 1-21.

23. A computer system for securely storing and transmitting data by applying a one- time pad, the system comprising: means (604) for generating a keystream based on a one-time pad; means (604) for encrypting plaintext data into ciphertext using a keystream having a length equal to a length of the source text; and means (604) for transmitting ciphertext and keystream on two separate network paths through a public packet switched internetwork; means (604) for receiving and storing the keystream in advance of receiving the ciphertext; and means (604) for replacing the stored keystream in the same storage location with the decrypted data as the ciphertext is decrypted.

24. A computer system for securely storing data by applying a one-time pad, the system comprising: means (604) for receiving a first data stream comprising a keystream of truly randomly generated characters; means (604) for storing the received keystream; means (604) for receiving a second data stream comprising ciphertext, wherein the first and second data streams are received on two physically separate routed communication channels through a public packet switched internetwork, wherein the ciphertext comprises a source text that is encrypted by applying the keystream to the source text; means (604) for decrypting the ciphertext using the keystream to create decrypted data that is equivalent to the source text; and means (604) for storing the decrypted data; wherein the means for receiving the keystream receives the keystream in advance of receiving the ciphertext, and wherein the means for storing the decrypted data is operable to store the decrypted data such that the keystream is replaced in the same storage location with the decrypted data as the ciphertext is decrypted.

25. The system according to Claim 24 wherein said decrypting means (604) is operable to decrypt the ciphertext by combining the ciphertext and keystream bitwise using a Boolean exclusive-OR operation.

26. The system as recited in Claim 24, wherein the means (604) for decrypting is operable to decypt the cyphertext concurrently with receiving the cyphertext.

**Patentansprüche**

1. Verfahren zum sicheren Speichern und Übertragen von Daten unter Anwendung eines One-Time Pads, wobei das Verfahren die folgenden computerimplementierten Schritte umfasst:

   Erzeugen (202) eines Schlüsselstroms (Keystream) basierend auf einem One-Time Pad;
   Verschlüsseln (204) von Klartextdaten in Chiffretext unter Verwendung eines Schlüsselstroms, dessen Länge gleich der Länge des Quelltexts ist;
   Übertragen (206) des Chiffretexts und des Schlüsselstroms auf zwei getrennten Netzwerkpfaden (108A, 108B);

   wobei jeder der zwei getrennten Netzwerkpfade (108A, 108B) ein paketgerouteter Pfad ist, der durch ein öffentliches paketgeschaltetes Internetwork physikalisch getrennt geroutet wird;
   wobei das Verfahren des Weiteren die folgenden Schritte umfasst:

   Empfangen (3302) des Schlüsselstroms vor dem Empfangen (312) des Chiffretexts;
   Cachen des Schlüsselstroms; und
   Entschlüsseln (312) des Chiffretexts durch Abrufen des Schlüsselstroms aus dem Cache und Überschreiben des abgerufenen Schlüsselstroms in dem Cache mit den entschlüsselten Daten.

2. Verfahren nach Anspruch 1, das den Schritt des Entschlüsselns (314) des Chiffretexts durch bitweises Kombinieren des Chiffretexts und des Schlüsselstroms unter Verwendung einer Booleschen exklusiven ODER (exclusive OR)-Operation umfasst.

3. Verfahren nach Anspruch 1, das des Weiteren die Schritte des Empfangens und Speicherns des Schlüsselstroms in einer ersten Speichervorrichtung und des Empfangens und Speicherns des Chiffretexts in einer zweiten Speichervorrichtung, die von der ersten Speichervorrichtung getrennt ist, umfasst.

4. Verfahren nach Anspruch 1, das des Weiteren die Schritte des Erstellens (504A) erster und zweiter getrennt gerouteter Kommunikationspfade in einem Netzwerk für den Schlüsselstrom und den Chiffretext umfasst, jeweils durch Erstellen erster und zweiter MPLS-Label-Pfade in Knoten des Netzwerks.

5. Verfahren nach Anspruch 1, das des Weiteren die Schritte des Erstellens (504B) erster und zweiter getrennt gerouteter Kommunikationspfade in einem Netzwerk für den Schlüsselstrom und den Chiffretext umfasst, jeweils durch Bestimmen der ersten und zweiten Pfade und Weiterleiten von Paketen des Schlüsselstroms und des Chiffretexts, wobei jedes derartige Paket einen IP-STRIKTE-ROUTEOPTION (IP-STRICT-ROUTEOPTION) - Wert in dem Paket eingestellt hat und Nutzdaten (Payload) hat, die einen der ersten und zweiten Pfade aufweisen.

6. Verfahren nach Anspruch 1, das des Weiteren die folgenden Schritte umfasst:

   Erzeugen des Schlüsselstroms unter Verwendung eines echten Zufallswert-Generators bei einem Sendehost; Erzeugen des Chiffretexts durch bitweises Kombinieren eines Quelltexts mit dem Schlüsselstrom unter Verwendung einer Booleschen exklusiven ODER (exclusive OR)-Operation; Erstellen eines ersten Routing-Pfads in einem Netzwerk zwischen dem Sendehost und einem Empfangshost für den Schlüsselstrom; Erstellen eines zweiten Routing-Pfads in dem Netzwerk für den Chiffretext, wobei der zweite Routing-Pfad von dem ersten Routing-Pfad vollständig physikalisch getrennt ist; und Weiterleiten des Schlüsselstroms an den Empfangshost über den ersten Routing-Pfad und Weiterleiten des Chiffretexts an den Empfangshost über den zweiten Routing-Pfad.

7. Verfahren nach Anspruch 6, das des Weiteren den Schritt des Komprimierens des Quelltexts vor dem Kombinieren des Quelltexts mit dem Schlüsselstrom umfasst.

**8.** Verfahren nach Anspruch 1, wobei der Schritt des Entschlüsselns zeitgleich mit dem Empfangen des Chiffretexts durchgeführt wird.

**9.** Verfahren nach Anspruch 1, wobei die Klartextdaten, die verschlüsselt werden, eine Datenbank repräsentieren, und wobei das Verfahren zum sicheren Duplizieren der Datenbank bereitgestellt wird.

**10.** Verfahren nach Anspruch 9, wobei der Schritt des Verschlüsselns der Datenbank umfasst:

Konvertieren der Datenbank in Quelltext, der aus einer Vielzahl von Binärzeichen besteht; Erzeugen eines Schlüsselstroms mit einer Länge, die gleich dem Quellentext ist, unter Verwendung eines echten Zufallswert-Generators; bitweises Kombinieren des Quelltexts und des Schlüsselstroms unter Verwendung einer Booleschen exklusiven ODER (exclusive OR)-Funktion.

**11.** Verfahren nach Anspruch 9, wobei der Schritt des Übertragens von Chiffretext und Schlüsselstrom auf zwei getrennten Netzwerkpfaden durchgeführt wird durch Kennzeichnen (508A) eines ersten Datenstroms, der den Chiffretext trägt, mit einem ersten MPLS-Label und durch Kennzeichnen eines zweiten Datenstroms, der den Schlüsselstrom trägt, mit einem zweiten MPLS-Label.

**12.** Verfahren nach Anspruch 9, wobei der Schritt des Übertragens von Chiffretext und Schlüsselstrom auf zwei getrennten Netzwerkpfaden das Erstellen eines ersten Pfads durch Erklären einer ersten strikten Route für einen ersten Strom, der den Chiffretext trägt, umfasst, und das Erstellen eines zweiten Pfads durch Erklären einer zweiten strikten Route für einen zweiten Datenstrom, der den Schlüsselstrom trägt.

**13.** Verfahren nach Anspruch 1, wobei die Klartextdaten, die verschlüsselt werden, einen Multimedia-Inhalt repräsentieren und von einem Service Provider zu einem Verbraucher übertragen werden.

**14.** Verfahren nach Anspruch 13, wobei der Schritt des Übertragens den Schlüsselstrom über einen DSL-Kommunikationslink zu dem Verbraucher überträgt und den Chiffretext über einen Kabelkommunikationslink an den Verbraucher überträgt.

**15.** Verfahren nach Anspruch 14, wobei der Schritt des Entschlüsselns in einer Set-Top-Box durchgeführt wird, die sowohl mit den DSL- als auch den Kabelkommunikationslinks verbunden ist.

**16.** Verfahren nach Anspruch 1, wobei die Klartextdaten, die verschlüsselt werden, einen Multimedia-Inhalt repräsentieren und von einem Content Provider an einen Service Provider übertragen werden.

**17.** Verfahren zum sicheren Speichern von Daten unter Anwendung eines One-Time Pads, wobei das Verfahren die folgenden computerimplementierten Schritte umfasst:

Empfangen (310) eines ersten Datenstroms, der einen Schlüsselstrom von echt zufällig erzeugten Zeichen enthält; Empfangen (312) eines zweiten Datenstroms, der Chiffretext enthält, wobei der erste und der zweite Datenstrom auf zwei physikalisch getrennt gerouteten Kommunikationskanälen durch ein öffentliches paketgeschaltetes Internetwork empfangen werden, wobei der Chiffretext einen Quelltext enthält, der durch Anwenden des Schlüsselstroms auf den Quelltext verschlüsselt wird; Entschlüsseln (314) des Chiffretexts unter Verwendung des Schlüsselstroms, was zur Erzeugung und Speicherung von entschlüsselten Daten führt, die äquivalent zu dem Quelltext sind; wobei der Schlüsselstrom vor dem Empfangen des Chiffretexts empfangen und gespeichert wird, und wobei der gespeicherte Schlüsselstrom an derselben Speicherstelle durch entschlüsselte Daten ersetzt wird, wenn der Chiffretext entschlüsselt wird.

**18.** Verfahren nach Anspruch 17, wobei der Quelltext, der verschlüsselt wird, eine Datenbank repräsentiert, und wobei das Verfahren zum sicheren Duplizieren der Datenbank bereitgestellt wird.

**19.** Verfahren nach Anspruch 17, wobei der Quelltext, der verschlüsselt wird, einen Multimedia Inhalt repräsentiert und von einem Service Provider durch einen Verbraucher empfangen wird.

**20.** Verfahren nach Anspruch 17, das den Schritt des Entschlüsselns des Chiffretexts durch bitweises Kombinieren des Chiffretexts mit dem Schlüsselstrom unter Verwendung einer Booleschen exklusiven ODER (exclusive OR)-Operation umfasst.

**21.** Verfahren nach Anspruch 17, wobei der Schritt des Entschlüsseln zeitgleich mit dem Empfangen des Chiffretexts durchgeführt wird.

**22.** Computerimplementierbares Befehlserzeugnis, das computerimplementierbare Befehle aufweist, die einen programmierbaren Computer veranlassen, alle Verfahrensschritte nach einem der Ansprüche 1 bis 21 durchzuführen.

**23.** Computersystem zum sicheren Speichern und Übertragen von Daten unter Anwendung eines One-Time Pads, wobei das System aufweist:

eine Einrichtung (604) zum Erzeugen eines Schlüsselstroms basierend auf einem One-Time Pad;
eine Einrichtung (604) zum Verschlüsseln von Klartextdaten in Chiffretext unter Verwendung eines Schlüsselstroms, dessen Länge gleich der Länge des Quelltexts ist; und
eine Einrichtung (604) zum Übertragen des Chiffretexts und des Schlüsselstroms auf zwei getrennten Netzwerkpfaden durch ein öffentliches paketgeschaltetes Internetwork;
eine Einrichtung (604) zum Empfangen und Speichern des Schlüsselstroms vor dem Empfangen des Chiffretexts; und
eine Einrichtung (604) zum Ersetzen des gespeicherten Schlüsselstroms an derselben Speicherstelle durch die entschlüsselten Daten, wenn der Chiffretext entschlüsselt wird.

24. Computersystem zum sicheren Speichern von Daten unter Anwendung eines One-Time Pads, wobei das System aufweist:

eine Einrichtung (604) zum Empfangen eines ersten Datenstroms, der einen Schlüsselstrom von echt zufällig erzeugten Zeichen enthält;
eine Einrichtung (604) zum Speichern des empfangenen Schlüsselstroms;
eine Einrichtung (604) zum Empfangen eines zweiten Datenstroms, der Chiffretext enthält, wobei der erste und der zweite Datenstrom auf zwei physikalisch getrennt gerouteten Kommunikationskanälen durch ein öffentliches paketgeschaltetes Internetwork empfangen werden, wobei der Chiffretext einen Quelltext enthält, der durch Anwenden des Schlüsselstroms auf den Quelltext verschlüsselt wird;
eine Einrichtung (604) zum Entschlüsseln des Chiffretexts unter Verwendung des Schlüsselstroms, was zur Erzeugung von entschlüsselten Daten führt, die äquivalent zu dem Quelltext sind; und
eine Einrichtung (604) zum Speichern der entschlüsselten Daten;

wobei die Einrichtung zum Empfangen des Schlüsselstroms den Schlüsselstrom vor dem Empfangen des Chiffretexts empfängt, und wobei die Einrichtung zum Speichern der entschlüsselten Daten so betrieben wird, dass sie die entschlüsselten Daten so speichert, dass der Schlüsselstrom an derselben Speicherstelle durch entschlüsselte Daten ersetzt wird, wenn der Chiffretext entschlüsselt wird.

25. System nach Anspruch 24, wobei die Einrichtung (604) zum Entschlüsseln so betrieben wird, dass sie den Chiffretext durch bitweises Kombinieren des Chiffretexts mit dem Schlüsselstrom unter Verwendung einer Booleschen exklusiven ODER (exclusive OR)-Operation entschlüsselt.

26. System nach Anspruch 24, wobei die Einrichtung (604) zum Entschlüsseln so betrieben wird, dass sie den Chiffretext zeitgleich mit dem Empfangen des Chiffretexts entschlüsselt.

## Revendications

1. Procédé de stockage et de transmission sécurisés de données par application d'un masque à usage unique, le procédé comprenant les étapes informatisées de : génération (202) d'une séquence de données basée sur un marque à usage unique ; cryptage (204) de données de texte en clair en cryptogramme en utilisant une séquence clé ayant une longueur égale à une longueur du texte source ; transmission (206) du cryptogramme et de la séquence clé sur deux voies de réseau séparées (108A, 108B) ; dans lequel chacune des deux voies de réseau séparées (108A, 108B) est une voie d'acheminement de paquets qui est acheminée physiquement séparément par le biais d'un inter-réseau à commutation de paquets public ; comprenant en outre l'étape de : réception (302) de la séquence clé avant la réception (312) du cryptogramme ; mise en mémoire cache de la séquence clé ; et de décryptage (314) du cryptogramme en recherchant la séquence clé dans la mémoire cache et en écrasant la séquence clé recherchée dans la mémoire cache par lesdites données décryptées.

2. Procédé selon la revendication 1, comprenant l'étape de décryptage (314) du cryptogramme par combinaison binaire du cryptogramme et de la séquence clé à l'aide d'une opération OU exclusif de Boole.

3. Procédé selon la revendication 1, comprenant en outre les étapes de réception et de stockage de la séquence clé dans un premier dispositif de stockage et de réception et de stockage du cryptogramme dans un deuxième dispositif de stockage qui est séparé du premier dispositif de stockage.

4. Procédé selon la revendication 1, comprenant les étapes d'installation (504A) d'une première et d'une deuxième voie de transmission acheminées séparément dans un réseau pour la séquence clé et le cryptogramme, respectivement, en installant une première et une deuxième voie d'étiquette MPLS dans des noeuds du réseau.

5. Procédé selon la revendication 1, comprenant en outre l'étape d'installation (504B) d'une première et d'une deuxième voie de transmission acheminées séparément dans un réseau pour la séquence clé et le cryptogramme, respectivement, en déterminant la première et la deuxième voie et en transmettant des paquets de la séquence clé et du cryptogramme, dans lequel chacun de ces paquets a une valeur IP-STRICT-ROUTE-OPTION fixée dans le paquet et comprend l'une de la première et de la deuxième voie de transmission comme charge utile.

6. Procédé selon la revendication 1, comprenant en outre l'étape de génération de la séquence clé en utilisant un générateur de valeurs réellement aléatoires au niveau d'un ordinateur hôte expéditeur ; génération du cryptogramme par la combinaison binaire d'un texte source avec la séquence clé à l'aide d'une opération OU exclusif de Boole ; installation d'une première voie d'acheminement dans un réseau entre l'ordinateur hôte expéditeur et un ordinateur hôte récepteur pour la séquence clé ; installation d'une deuxième voie d'acheminement dans le réseau pour le cryptogramme, dans lequel la deuxième voie d'acheminement est complètement séparée physiquement de la première voie d'acheminement ; et transmission de la séquence clé à l'ordinateur hôte récepteur par l'intermédiaire de la première voie d'acheminement et transmission du cryptogramme à l'ordinateur hôte récepteur par l'intermédiaire de la deuxième voie d'acheminement.

7. Procédé selon la revendication 6, comprenant en outre l'étape de compression du texte source avant la combinaison du texte source avec la séquence clé.

8. Procédé selon la revendication 1, dans lequel l'étape de décryptage est réalisée en même temps que la réception du cryptogramme.

9. Procédé selon la revendication 1, dans lequel les données de texte en clair qui sont cryptées représentent une base de données, et dans lequel le procédé est prévu afin de dupliquer la base de données de manière sécurisée.

10. Procédé selon la revendication 9, dans lequel ladite étape de cryptage de la base de données comprend : la conversion de la base de données en texte source composé d'une pluralité de chiffres binaires ; la génération d'une séquence clé d'une longueur égale au texte source à l'aide d'un générateur de valeurs réellement aléatoires ; la combinaison binaire du texte source et de la séquence clé à l'aide d'une fonction OU exclusif de Boole.

11. Procédé selon la revendication 9, dans lequel ladite étape de transmission du cryptogramme et de la séquence clé sur deux voies de réseau séparées est réalisée en étiquetant (508A) une première séquence de données portant le cryptogramme avec une première étiquette MPLS et en étiquetant une deuxième séquence de données portant la séquence clé avec une deuxième étiquette MPLS.

12. Procédé selon la revendication 9, dans lequel ladite étape de transmission du cryptogramme et de la séquence clé sur deux voies de réseau séparées comprend l'installation d'une première voie en déclarant un premier chemin strict pour une première séquence de données portant le cryptogramme et l'installation d'une deuxième voie en déclarant un deuxième chemin strict pour une deuxième séquence de données portant la séquence clé.

13. Procédé selon la revendication 1, dans lequel les données de texte clair qui sont cryptées représentent un contenu multimédia et sont transmises par un fournisseur d'accès à un consommateur.

14. Procédé selon la revendication 13, dans lequel l'étape de transmission transmet la séquence clé sur une liaison de communication DSL au consommateur et transmet le cryptogramme sur une liaison de communication câblée au consommateur.

15. Procédé selon la revendication 14, dans lequel l'étape de décryptage est réalisée dans un boîtier décodeur qui est relié à ladite liaison de communication DSL et à ladite liaison de communication câblée.

16. Procédé selon la revendication 1, dans lequel les données de texte clair qui sont cryptées représentent un contenu multimédia et sont transmises par un fournisseur de contenu à un fournisseur d'accès.

17. Procédé de stockage sécurisé de données par application d'un masque à usage unique, le procédé comprenant les étapes informatisées de réception (310) d'une première séquence de données comprenant une séquence clé de caractères générés de manière réellement aléatoire ; réception (312) d'une deuxième séquence de données comprenant un cryptogramme, dans lequel la première et la deuxième séquence de données sont reçues sur deux canaux de transmission acheminés physiquement séparément par le biais d'un inter-réseau à commutation de paquets public, dans lequel le cryptogramme comprend un texte source qui est crypté en appliquant la séquence clé au texte source ; décryptage (314) du cryptogramme à l'aide de la séquence clé, ce qui entraîne la création et le stockage de données décryptées qui sont équivalentes au texte source ; dans lequel la séquence clé est reçue et stockée avant la réception du cryptogramme, et dans lequel la séquence clé stockée est remplacée dans le même emplacement de stockage par les données décryptées lorsque le cryptogramme est décrypté.

18. Procédé selon la revendication 17, dans lequel le texte source qui est crypté représente une base de données, et dans lequel le procédé est prévu afin de dupliquer la base de données de manière sécurisée.

19. Procédé selon la revendication 17, dans lequel le texte source qui est crypté représente un contenu multimédia et est reçu de la part d'un fournisseur d'accès par un consommateur.

20. Procédé selon la revendication 17, comprenant l'étape de décryptage du cryptogramme par une combinaison binaire du cryptogramme et de la séquence clé à l'aide d'une opération OU exclusif de Boole.

21. Procédé selon la revendication 17, dans lequel l'étape de décryptage est réalisée en même temps que la réception du cryptogramme.

22. Produit d'instructions exécutables par un ordinateur comprenant des instructions exécutables par un ordinateur permettant à un ordinateur programmable de réaliser l'ensemble des étapes de procédé selon l'une quelconque des revendications 1 à 21.

23. Système informatique de stockage et de transmission sécurisés de données par application d'un masque à usage unique, le système comprenant : des moyens (604) de génération d'une séquence clé sur la base d'un masque à usage unique ; des moyens (604) de cryptage de données de texte clair en cryptogramme à l'aide d'une séquence clé ayant une longueur égale à une longueur du texte source ; et des moyens (604) de transmission du cryptogramme et de la séquence clé sur deux voies de réseau séparées par le biais d'un inter-réseau à commutation de paquets public ; des moyens (604) de réception et de stockage de la séquence clé avant la réception du cryptogramme ; et des moyens (604) de remplacement de la séquence clé stockée dans le même emplacement de stockage par les données décryptées lorsque le cryptogramme est décrypté.

24. Système informatique de stockage sécurisé de données par application d'un masque à usage unique, le système comprenant : des moyens (604) de réception d'une première séquence de données comprenant une séquence clé de caractères générés de manière réellement aléatoire ; des moyens (604) de stockage de la séquence clé reçue ; des moyens (604) de réception d'une deuxième séquence de données comprenant un cryptogramme, dans lequel la première et la deuxième séquence de données sont reçues sur deux canaux de transmission acheminés physiquement séparés par le biais d'un inter-réseau à commutation de paquets public, dans lequel le cryptogramme comprend un texte source qui est crypté en appliquant la séquence clé au texte source ; des moyens (604) de décryptage du cryptogramme en utilisant la séquence clé afin de créer des données décryptées qui sont équivalentes au texte source ; et des moyens (604) de stockage des données décryptées ; dans lequel les moyens de réception de la séquence clé reçoivent la séquence clé avant la réception du cryptogramme, et dans lequel les moyens de stockage des données décryptées sont capables de stocker les données décryptées afin que la séquence clé soit remplacée dans le même emplacement de stockage par les données décryptées lorsque le cryptogramme est décrypté.

25. Système selon la revendication 24, dans lequel lesdits moyens de décryptage (604) sont capables de décrypter le cryptogramme par une combinaison binaire du cryptogramme et de la séquence clé à l'aide d'une opération OU exclusif de Boole.

26. Système selon la revendication 24, dans lequel les moyens (604) de décryptage sont capables de décrypter le cryptogramme en même temps que la réception du cryptogramme.

*Fig. 1*

# Fig. 2

202 GENERATE (TRULY RANDOM) KEY STREAM

202 RECEIVE OR
GENERATE PLAIN TEXT

204
GENERATE CIPHERTEXT BY COMBINING PLAINTEXT
AND KEYSTREAM BITWISE USING EXCLUSIVE-OR

206 ROUTE KEY STREAM AND CIPHERTEXT TO RECEIVING HOST
OVER TWO PHYSICALLY SEPARATE COMMUNICATION CHANNELS

# *Fig. 3*

310 RECEIVE KEYSTREAM ON FROM FIRST
ROUTED PATH

312 RECEIVE CIPHERTEXT
ON SECOND ROUTED PATH

314
GENERATE PLAINTEXT BY COMBINING CIPHERTEXT
AND KEYSTREAM BITWISE USING EXCLUSIVE-OR

316 STORE OR PROCESS PLAINTEXT

# Fig. 4

```
┌─────────────────────────────────────────┐
│ 402A GENERATE RANDOM KEY STREAM          │
└─────────────────────────────────────────┘
                    │
┌─────────────────────────────────────────┐
│ 402B TRANSMIT KEY STREAM ON FIRST ROUTED │
│ PATH TO RECEIVING HOST FOR STORAGE THERE │
└─────────────────────────────────────────┘
                    │
        ┌───────────────────────┐
        │ 404 RECEIVE OR         │
        │ GENERATE PLAIN TEXT    │
        └───────────────────────┘
                    │
┌─────────────────────────────────────────┐
│                 406                       │
│ GENERATE CIPHERTEXT BY COMBINING PLAINTEXT│
│ AND KEYSTREAM BITWISE USING EXCLUSIVE-OR  │
└─────────────────────────────────────────┘
                    │
┌─────────────────────────────────────────────┐
│ 408 ROUTE CIPHERTEXT TO RECEIVING HOST OVER   │
│ SECOND ROUTED PATH THAT IS PHYSICALLY        │
│ SEPARATE FROM FIRST PATH                      │
└─────────────────────────────────────────────┘
                    │
        ┌───────────────────────┐
        │ 410 RECEIVE CIPHERTEXT │
        │ ON SECOND ROUTED PATH  │
        └───────────────────────┘
                    │
      ┌──────────────────────────────────┐
      │ 412 RETRIEVE KEYSTREAM FROM STORAGE│
      └──────────────────────────────────┘
                    │
┌─────────────────────────────────────────────┐
│                 414                           │
│ GENERATE PLAINTEXT BY COMBINING CIPHERTEXT AND│
│ KEYSTREAM BITWISE USING EXCLUSIVE-OR;         │
│ CONCURRENTLY REPLACE KEYSTREAM IN STORAGE     │
│ WITH PLAINTEXT                                │
└─────────────────────────────────────────────┘
                    │
      ┌──────────────────────────────────┐
      │ 416 STORE OR PROCESS PLAINTEXT    │
      └──────────────────────────────────┘
```

## *Fig. 5*

**502** ESTABLISH FIRST AND SECOND PHYSICALLY SEPARATE ROUTED PATHS IN NETWORK

**504A** PERFORM MPLS PATH SETUP FOR FIRST AND SECOND PATHS

**504B** DETERMINE FIRST AND SECOND HOP-BY-HOP ROUTED PATHS

**506** GENERATE KEYSTREAM AND CIPHERTEXT

**508A** APPLY FIRST PATH LABEL TO KEYSTREAM PACKETS IN PACKET HEADER; APPLY SECOND PATH LABEL TO CIPHERTEXT PACKETS IN PACKET HEADER

**508B** SET P-STRICT-ROUTE-OPTION IN PACKETS OF KEYSTREAM AND CIPHERTEXT; PROVIDE FIRST AND SECOND PATHS AS PAYLOADS IN PACKET HEADER

**510** FORWARD PACKETS IN NETWORK TO RECEIVING HOST

*Fig. 6*

EP 1 732 259 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6199165 B1